Europäisches Patentamt

European Patent Office

Office européen des brevets

(19)

(11) Veröffentlichungsnummer: **0 250 912**
**A2**

# (12) EUROPÄISCHE PATENTANMELDUNG

(21) Anmeldenummer: 87108055.2

(22) Anmeldetag: 04.06.87

(51) Int. Cl.⁴: **F16D 55/14**

(30) Priorität: 28.06.86 DE 3621787

(43) Veröffentlichungstag der Anmeldung:
07.01.88 Patentblatt 88/01

(84) Benannte Vertragsstaaten:
**DE FR GB IT**

(71) Anmelder: **Xaver Fendt & Co.**
**Postfach 140 Johann-Georg-Fendt-Strasse 4**
**D-8952 Marktoberdorf(DE)**

(72) Erfinder: **Jordan, Bernhard**
**Schwabenstrasse 30**
**D-8952 Marktoberdorf(DE)**

(54) **Scheibenbremse.**

(57) Beschrieben ist eine Scheibenbremse sowie das dazugehörige Bremsgehäuse 1, das in die Triebachse insbesondere einer landwirtschaftlich nutzbaren Zugmaschine integriert ist. Die Scheibenbremse besteht aus zwei im Bremsgehäuse 1 untergebrachten Druckscheiben 3, die beim gegensinnigen Verdrehen mit Hilfe von zwei Betätigungselmenten unter Erzielung einer Bremswirkung axial auseinanderrücken. Um den Querschnitt des Bremsgehäuses 1 bei geringstmöglichen Außenabmessungen möglichst einfach zu gestalten, werden verschiedene Maßnahmen vorgeschlagen, die es ermöglichen, den Platzbedarf der Betätigungselemente in unmittelbarer Nähe der Druckscheiben 3 wesentlich zu verringern. Dadurch steht dieser Bereich für die Anordnung der Wandung 1a des Bremsgehäuses 1 zur Verfügung, dessen Querschnitt somit in einfacher Weise kreisförmig ausgebildet werden kann.

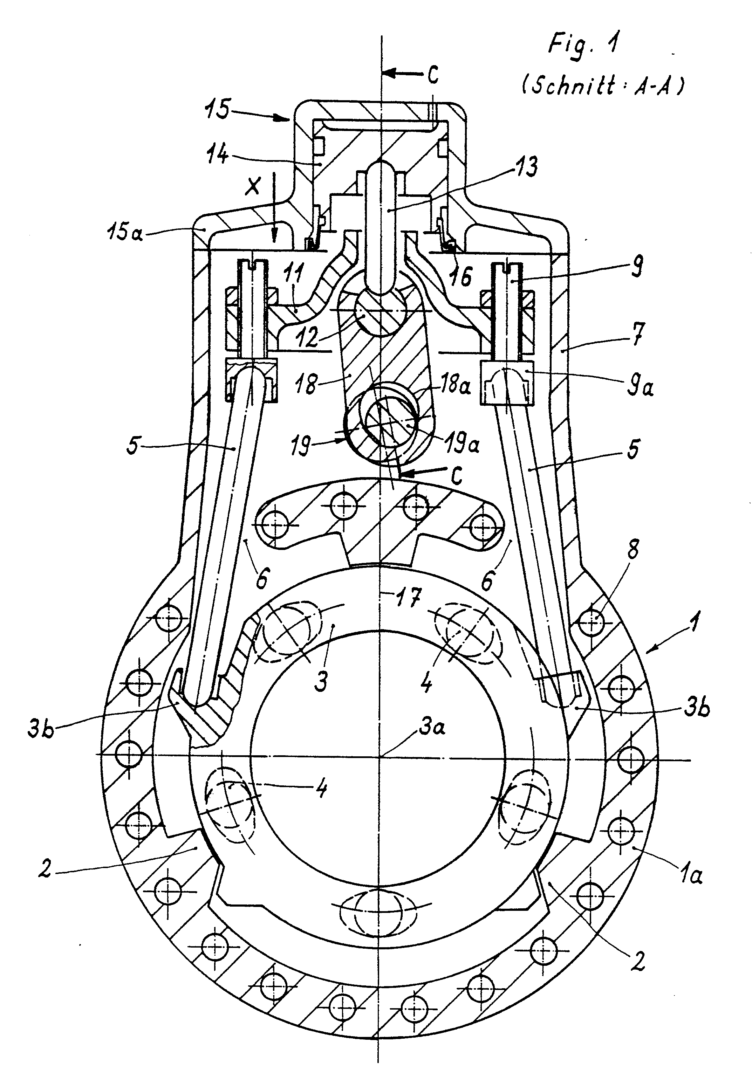

Zur Veröffentlichung in Verbindung mit der Zusammenfassung vorgesehen: Fig. 1.

Fig. 1
(Schnitt A-A)

EP 0 250 912 A2

Xerox Copy Centre

## Scheibenbremse

Die Erfindung betrifft eine Scheibenbremse mit den im Oberbegriff des Hauptanspruches angegebenen Merkmalen.

Bei einer derartigen in der DE-OS 26 38 145 beschriebenen Scheibenbremse ist in unmittelbarer Nähe einer jeden Druckscheibe eine Lasche angelenkt. Beide Laschen sind in ihrem freien Endbereich über einen Bolzen miteinander verbunden und bilden einen Kniehebel, dessen Auslenkung zu einer gegensinnigen Verdrehung der Druckscheiben im Bremssinne führt. Zu Auslenkung des Kniehebels greift an dem Bolzen eine radial zu den Druckscheiben verschiebbare Betätigungsstange an, die ihrerseits über einen einarmigen Hebel durch einen hydraulischen Bremszylinder betätigt wird.

Dadurch, daß sich die Laschen in unmittelbarer Nähe der Druckscheiben befinden, kann der Querschnitt des Bremsgehäuses nicht, wie aus Gründen einer einfachen Fertigung erwünscht, kreisförmig ausgebildet werden, wenn bei vorgegebenem Durchmesser der Druckscheiben die Außenabmessungen des Bremsgehäuses möglichst gering gehalten werden sollen. Das Bremsgehäuse der bekannten Scheibenbremse ist dementsprechend kompliziert geformt; was sich insbesondere dann als nachteilig herausstellt, wenn das Bremsgehäuse beispielsweise bei einer landwirtschaftlich nutzbaren Zugmaschine mit einer Portalachse in den Achsaufbau einbezogen werden soll. Bei einem solchen Achsaufbau sind die das Bremsgehäuse mit den benachbarten Bauteilen verbindenden Schrauben hohen Kräften ausgesetzt, damit selbst große aus einer hohen Achslast und -stößen resultierende Drehmomente ohne Schäden in den Fahrzeugaufbau eingeleitet werden können. Um diese Forderung zu erfüllen, sind über den Umfang des Bremsgehäuses verteilt möglichst viele Schrauben vorzusehen. Bei einer Scheibenbremse wie der bekannten müßten diese Schrauben auf mehreren verschiedenen Lochkreisen untergebracht werden, was nicht nur in der Fertigung einen zusätzlichen Aufwand darstellt und auch entsprechende Anpassungsmaßnahmen bei den benachbarten Bauteilen erfordert, sondern auch ein Verdrehen des Portals gegenüber dem übrigen Achskörper praktisch ausschließt. Die letztgenannte Maßnahme wird vor allem dazu ergriffen, um bei Verwendung der gleichen Achse unterschiedliche Radstände und/oder Bodenfreiheiten zu realisieren.

Hinzu kommt, daß Scheibenbremsen dieser Gattung zur Verringerung des Verschleißes in der Regel mit Öl gefüllt sind. In derartigen Fällen ist aber wegen der komplizierten Querschnittsform die Einarbeitung einer Nut in die Anschlußflächen für eine Ring-Dichtung, die einen metallischen Kontakt der Anschlußflächen der benachbarten Bauteile ermöglicht, sehr aufwndig. Üblicherweise werden daher in solchen Fällen zur Abdichtung Papierdichtungen eingesetzt. Allerdings sind solche Papierdichtungen erfahrungsgemäß nicht immer in der Lage, über viele viele Jahre hinweg ihre Dichtfunktion aufrecht zu erhalten, weil sie im Laufe der Zeit durch nicht zu vermeidende geringste Relativbewegungen der miteinander über die Schrauben verbundenen Achsbauteile zerstört werden können.

Bei den bekannten Scheibenbremsen kommt außerdem hinzu, daß zumindest ein Betätigungsglied aus dem Bremsgehäuse herausgeführt ist. Die Öffnung, durch die das Betätigungsglied dabei geführt ist, ist zwar in der Regel durch eine Manschette o. dgl. Dichtung abgeschlossen, jedoch besteht immer die Gefahr einer Beschädigung mit nachfolgender Verunreinigung des Bremsgehäuseinneren.

Ausgehend von diesem Stand der Technik ist es Aufgabe der Erfindung, eine Scheibenbremse der eingangs beschriebenen Gattung zu schaffen, bei der das Bremsgehäuse bei geringster Außenabmessungen einen geometrisch einfachen Kreisquerschnitt aufweist.

Die Maßnahmen zur Lösung dieser Aufgabe sind im kennzeichnenden Teil des Hauptanspruches beschrieben.

Durch die Erfindung ist es gelungen, im Bereich der Betätigungseinrichtung den unmittelbar an die Druckscheiben anschließenden Bereich im wesentlichen freizuhalten von Bauteilen der Betätigungseinrichtung. Das im Querschnitt kreisförmige Bremsgehäuse wird in diesem Bereich lediglich durch zwei in Umfangsrichtung sehr wenig Platz benötigende Aussparungen unterbrochen, so daß praktisch der gesamte Umfang des Bremsgehäuses für die Anordnung von Verbindungsschrauben zu den dem Bremsgehäuse benachbarten Bauteilen zur Verfügung steht. Die Schrauben können auf einem einzigen Lochkreis untergebracht werden, so daß eine Änderung der Relativstellung des Portals der Portal achse keine Schwierigkeiten bereitet. Außerdem kann in einfachster Weise durch Drehen eine Nut zur Aufnahme eines Dichtungsringes in die Anschlußflächen des Bremsgehäuses oder der benachbarten Bauteile eingearbeitet werden. Ein weiterer wesentlicher Vorteil der vorgeschlagenen Anordnung der Betätigungselemente besteht ferner in der wirkungsvolleren Übertragung der Rückholkraft der zwischen den Drckscheiben wirksamen Rückholfedern auf das Stellglied.

Sind die Betätigungselemente entsprechend Anpruch 2 parallel angeordnet, so sind die Bremskräfte an allen gleichzeitig betätigten Scheibenbremsen des Fahrzeuges auch dann einander gleich, wenn infolge von ungleichmäßiger Abnutzung der Bremsbeläge unterschiedliche Betätigungswege auftreten.

Durch die Maßnahmen nach dem Anspruch 4 wird eine gute Abschirmung des Stellgliedes gegen Spritzöl bei einer nassen Scheibenbremse und Abrieb bei einer trockenen Scheibenbremse erzielt.

Das Merkmal des Anspruches 5 bietet den Vorteil, daß das Innere des Gehäuses bei entferntem Stellglied die Montage der Einzelteile der Betätigungseinrichtung oder deren Reparatur erleichternd frei zugänglich ist.

Ein weiteres Merkmal, das einfache Bauteile und eine einfache Montage ermöglicht, ist nach Anspruch 9 dadurch gegeben, daß als Betätigungselemente Druckstangen vorgesehen sind.

Durch die Merkmale der Ansprüche 10, 11 ist es möglich, eine Bremsbetätigung nicht nur durch Beaufschlagung des Stellgliedes zu erzielen, sondern zusätzlich über eine gesondert betätigbare Handhabe. Dabei ist durch den Anspruch 11 eine sehr kurze Bauweise des Bremsbetätigungsgehäuses bei weiterer Vereinfachung des Aufbaus erreichbar.

Weitere vorteilhafte Einzelheiten und Merkmale der Erfindung gehen aus den übrigen Ansprüchen hervor.

Die Erfindung wird im folgenden anhand einer Zeichnung näher beschrieben. Es zeigt:

Fig. 1 eine Schnittansicht der erfindungsgemäßen Scheibenbremse nach der Linie A - A in Fig. 2,

Fig. 2 eine Ansicht in das Bremsbetäigungsgehäuse der Scheibenbremse in Richtung des Pfeils X in Fig. 1,

Fig. 3 eine Schnittansicht des Bremsbetätigungsgehäuses der Scheibenbremse nach der Linie B - B in Fig. 2,

Fig. 4 eine Schnittansicht des Bremsbetätigungsgehäuses nach der Linie C - C in Fig. 1 und

Fig. 5 eine Schnittansicht entsprechend Fig. 3 eines weiteren Ausführungsbeispieles.

Die in Fig. 1 gezeigte Scheibenbremse weist ein Bremsgehäuse 1 auf, das dazu bestimmt ist, in den Achstrichter einer Portalachse eines landwirtschaftlichen Schleppers integriert zu werden. Die Wandung des Bremsgehäuses 1 ist im Querschnitt kreisförmig und weist an der inneren Oberfläche in bekannter Weise drei gelichmäßig versetzte Zentrieransätze 2 für zwei gleichachsig nebeneinander angeordnete Druckscheiben 3 auf. Die Druckscheiben 3 sind in ebenfalls üblicher Weise durch

.gegensinniges Verdrehen um ihre Achse 3a mit Hilfe einer zwischen ihnen angeordneten, üblichen Spreizeinrichtung 4 in axialer Richtung auseinanderrückbar, wobei sie mit der nicht gezeigten abzubremsenden Welle drehfest verbundene Bremsscheiben gegen Bremsflächen (Zwischenscheiben) des Bremsgehäuses 1 drücken und so ein Abbremsen der Welle bewirken. Um die Lebensdauer der Scheibenbremse zu erhöhen, laufen alle Teile im Bremsgehäuse 1 in Öl. Die Erfindung kann jedoch ohne weiteres auch bei trocken laufenden Scheibenbremsen benutzt werden.

Zum gegensinnigen Verdrehen weisen die Druckscheiben 3 auf einander entgegengesetzten Seiten je einen Ansatz 3b mit einer Tragpfanne auf, in die als Betätigungselement für die Scheibenbremse eine Druckstange 5 mit halbkugelfürmigen Endbereichen eingesetzt ist. Jede Druckstange 5 ragt durch eine Aussparung 6 in die Wandung 1a des Bremsgehäuses 1 in ein nach oben hin offenes Bremsbetätigungsgehäuse 7 hinein. Mit Ausnahme de Bereiches, in dem sich die Aussparungen 6 befinden, ist die Wandung 1a mit einer Vielzahl achsparalleler Bohrungen 8 zur Aufnahme der für die Verbindung des Bremsgehäuses 1 mit den benachbarten bauteilen des Achstrichters benötigten Schrauben versehen.

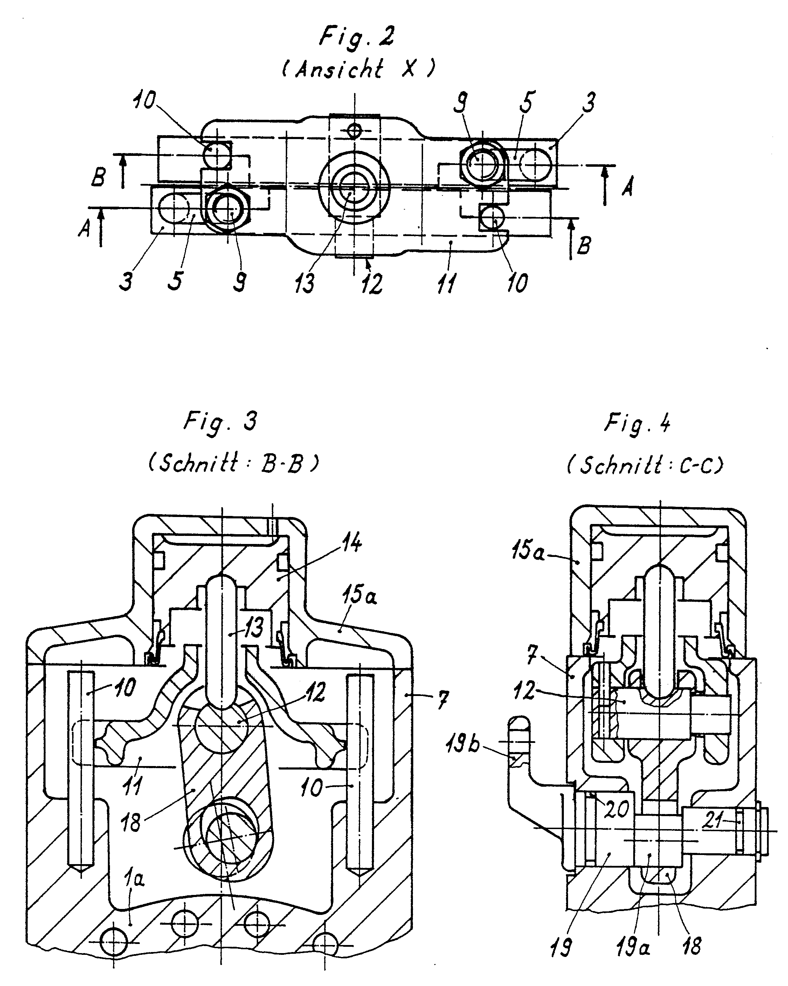

Wie auch aus den Fig. 2 bis 4 hervorgeht, sind die Druckstangen 5 mit ihrem oberen Bereich im Gelenkkopf 9a von Gelenkschrauben 9 eingesetzt, die verstellbar in einem mit Hilfe von zwei in einem Vorsprung des Bremsbetätigungsgehäuses 7 eingelassenen Führungsstangen 10 radial verschiebbaren Querjoch 11 eingeschraubt sind. Mittig zwischen den Gelenkschrauben 9 ist im glockenförmigen Querjoch 11 ein mit seiner Achse parallel zu 3a der Druckscheiben 3 ausgerichteter Gelenkbolzen 12 gelagert, der über eine Druckstelze 13 mit dem in Richtung der Führungsstangen 10 verschiebbaren Kolben 14 eines hydraulisch betätigbaren Bremszylinders 15 in Verbindung steht. Das Gehäuse 15a des Bremszylinders 15 ist dabei flanschartig erweitert und schließt das Bremsbetätigungsgehäuse 7 nach oben hin ab. Bezüglich seinen Außenabmessungen und seiner Form ist das Querjoch 11 der lichten Weite des Bremsbetätigungsgehäuses 7 derart angepaßt, daß praktisch kein durch die Aussparungen 6 aus dem Inneren des Bremsgehäuses 1 in das Bremsbetätigungsgehäuse 7 spritzendes und hier zur Schmierung der Gelenkstellen des Betätigungsgestänges benötigtes Öl in den Bereich über dem Querjoch 11 gelangen kann. Dies ist insbensondere dann wesentlich, wenn der oberhalb des Querjochs 11 befindliche Bremszylinder 15 mit Bremsflüssigkeit beaufschlagt ist. Um die in diesem Fall nur bremsflüssigkeitsresistente Dichtung des Kolbens 14 gegen Spritzöl aus dem Bremsbereich zu schützen, ist die Zylinderlaufbahn durch eine Manschette 16 abgeschirmt, die gegen Bremsflüssigkeit und Öl resistent sein muß. Derzeit verfügbar sind jedoch nur solche Manschetten, die bedingt gegen die genannten Flüssigkeiten resistent sind.

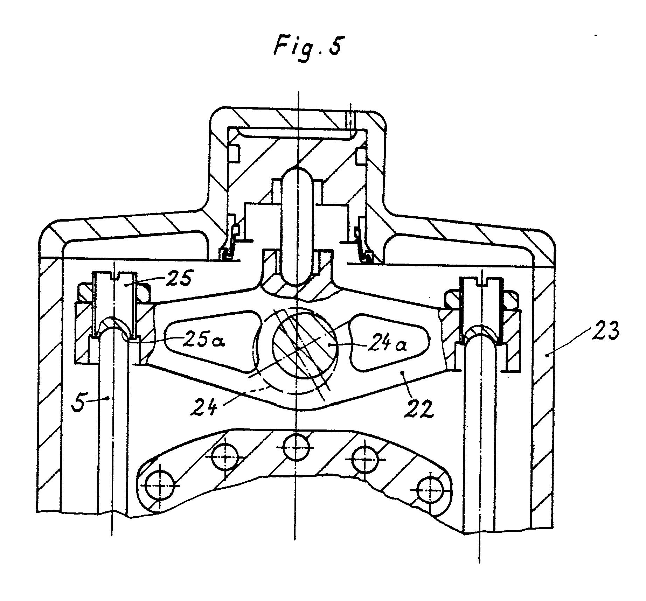

Der Abstand der Angriffstellen der Druckstangen 5 am Querjoch 11 ist im vorliegenden Ausführungsbeispiel etwas geringer gehalten als der Abstand der Angriffstellen der Druckstangen 5 an den Druckscheiben 3. Dadurch verlaufrne die Druckstangen 5 in Bezug auf eine die Achsen des Gelenkbolzens 12 und die Druckscheiben 3 enthaltende Ebene 17 leicht geneigt. Durch entsprechende Verbreiterung des Querjochs ist es aber ohne weiteres möglich, die Druckstangen 5 in einem solchen Abstand von dem Gelenkbolzen 12 am Querjoch angreifen zu lassen, daß die Druckstangen 5 zu der erwähnten Ebene 17 praktisch parallel verlaufen, so wie dies im Ausführungsbeispiel gemäß Fig. 5 angedeutet ist. In diesem Fall stellt sich unabhängig vom Abnutzungsgrad der Bremsscheiben in allen Scheibenbremsen des Fahrzeuges immer die gleiche Bremswirkung ein, da sich die Neigung der Druckstangen 5 relativ zur Ebene 17 bei einer vollständig abgenutzten Bremsscheibe im Vergleich zu einer neuen Scheibe nur unwesentlich ändert und so die Kraftübersetzung des Betätigungsgestänges unbeeinflußt bleibt.

Innerhalb des Querjoches 11 ist auf dem Gelenkbolzen 12 ferner eine Lasche 18 - schwenkbar gelagert, die in ihrem dem Bremsgehäuse 1 zugewandten Endbereich ein Langloch 18a aufweist. Mit diesem Langloch 18a wirkt der Exzenter 19a eines in der Nähe der Ebene 17 im Bremsbetätigungsgehäuse 7 drehbar gelagerten Exzenterbolzens 19 zusammen. Der Innenraum des Bremsbetätigungsgehäuses 7 ist mittels auf dem Exzenterbolzen 19 angeordneter Dichtungsringe 20, 21 öldicht abgedichtet. Damit ist die einzige Stelle, an der ein Bauteil aus dem Bremsgehäuse 1 oder das Bremsbetätigungsgehäuse 7 herausführt, mit einer im praktischen Einsatz nicht beschädigbaren Dichtung versehen.

Außerhalb des Bremsbetätigungsgehäuses 7 steht der Exzenterbolzen 19 mit einem Verstellhebel 19b in Verbindung. Er kann im Bereich zwischen zwei Schwenkendstellungen verschwenkt werden. Bei der Montage des Betätigungsgestänges wird der Exzenter 19a so eingestellt, daß die Verbindungslinie seiner Achse mit der des Exzenterbolzens 19 bei noch unbetätigter Scheibenbremse mit der Ebene 17 einen Winkel von nahezu 90° einschließt und er leicht am unteren Rand des Langloches 18a anliegt. Beim Feststellen der Scheibenbremse wird der Winkel durch die sich lageverändernde Achse des Exzenters 19a vergrößert, wobei der Exzenter 19a die Lasche 18 und mit ihr das Querjoch 11 im Bremssinn verschiebt.

Bei dem Ausführungsbeispiel nach Fig. 5 ist neben der bereits erwähnten parallelen Anordnung der Druckstangen 5 die manuell bedienbare Feststelleinrichtung für die Scheibenbremse in abgewandelter Form vorgesehen. Danach ist das Querjoch 22 nicht auf einem relativ zum Bremsbetätigungsgehäuse 23 verschiebbaren Gelenkbolzen 12, sondern auf dem Exzenter 24a eines im Bremsbetätigungsgehäuse 23 drehbar gelagerten Exzenterbolzens 24 gelagert. Dieser gibt dem Querjoch 22 die seitliche Führung, so daß die beidem Ausführungsbeispiel gemäß Fig. 1 bis 4 vorgesehenen Führungsstangen wegfallen. Damit sich beim Verschwenken des Querjochs 22 die Lage der Druckstangen 5 relativ zur Ebene 17 nicht wesentlich ändert, befinden sich ferner die Gelenkschrauben 25 mit ihren Gelenkstellen 25a in einer quer zur Bewegungsbahn des Kolbens 14 durch die Achse des Exzenterbolzens 24 verlaufenden Ebene.

Im Folgenden wird die Arbeitsweise der Scheibenbremse gemäß den Fig. 1 bis 4 beschrieben. Die Scheibenbremse gemäß Fig. 5 arbeitet bezüglich ihrer Betätigung mit Ausnahme des bereits erwähnten entsprechend.

In der gezeigten Stellung des Kolbens 14 des Bremszylinders 15 ist die Scheibenbremse unbetätigt. Unter der Wirkung der zwischen den beiden Druckscheiben 3 wirksamen Rückzugsfedern befinden sich die Druckscheiben 3 in ihrer Ausgangstellung, in der sie über die Druckstangen 5, die Gelenkschrauben 9 und das Querjoch 11 die Druckstelze 13 gegen den Kolben 14 schiebt. Gleichzeitig liegt der Exzenter 19a des Exzenterbolzens 19 leicht an der unteren Begrenzung des Langloches 18a der Lasche 18 an.

Bei einer Betätigung der Fußbremse des Fahrzeuges wird der Kolben 14 mit Druckmittel beaufschlagt und um eine geringe Strecke verschoben. Diese Bewegung überträgt sich über die Druckstelze 13, den Gelenkbolzen 12, das Querjoch 11, die Gelenkschrauben 9 und die Druckstangen 5 auf die Druckscheiben 3, die dadurch entsprechend gegensinnig verdreht werden und einen Bremsvorgang auslösen. Die Druckstangen 5 erfahren bei diesem Vorgang praktisch keine Änderung ihrer Lage im Raum, so daß die Aussparungen 6 in der Wandung 1a des Bremsgehäuses 1 nur unwesentlich breiter sein müssen als die Ausdehnung der Druckstangen 5 in Umfangrichtung der Wandung 1a.

Wird ausgehend von der unbetätigten Scheibenbremse die Feststellbremse des Fahrzeuges durch Verdrehen des Exzenterbolzens 19 betätigt, so zieht der sich nach unten bewegende Exzenter 19a über die Lasche 18a das Querjoch 11 vom Bremszylinder 15 weg, bis die Scheibenbremse in der bereits beschriebenen Weise betätigt ist.

## Ansprüche

1. Scheibenbremse, insbesondere für landwirtschaftlich nutzbare Zugmaschinen, mit einem zum Anschluß an ein benachbartes Gehäuse bestimmten Bremsgehäuse (1) und zwei darin untergebrachten Druckscheiben (3), die beim gegensinnigen Verdrehen mit Hilfe von zwei mit seitlichem Abstand voneinander an den Druckscheiben (3) angreifenden Betätigungselementen unter Erzielung einer Bremswirkung axial auseinanderrücken, **dadurch gekennzeichnet,** daß die Wandung (1a) des Bremsgehäuses (1) für jedes Betätigungselement eine Aussparung (6) aufweist und die Betätigungselemente durch die Aussparungen (6) in ein außen am Bremsgehäuse (1) anschließendes Bremsbetätigungsgehäuse (7, 21) hineingreifen, daß die Betätigungselemente eine geringe Ausdehnung in Umfangsrichtung des Bremsgehäuses (1) aufweisen, daß die Betätigungselemente einenends in zumindest annähernd tangentialer Richtung an der zugeordneten Druckscheibe (3) und anderenends mit Abstand voneinander an einem im Bremsbetätigungsgehäuse (7, 23) um eine parallel zur Achse (3a) der Druckscheiben (3) verlaufende Achse pendel- und radial zu den Druckscheiben (3) verschiebbaren Querjoch (11, 22) angreifen, daß das Querjoch (11, 22) um ein mittig zwischen den Angriffstellen der Betätigungselemente angeordnetes Gelenk (Gelenkbolzen (12), Exzenterbolen (24)) pendelbar ist, daß die Betätigungselemente bezogen auf die die Achsen (3a) der Druckscheiben (3) und des Gelenkbolzens (12) enthaltende Ebene (17) spiegelsymmetrisch angeordnet sind und daß mittig am Querjoch (1, 22) ein Stellglied angreift.

2. Scheibenbremse nach Anspruch 1, **dadurch gekennzeichnet,** daß die Betätigungselemente parallel zur Ebene (17) verlaufen.

3. Scheibenbremse nach den Ansprüchen 1 und 2, **dadurch gekennzeichnet,** daß das Querjoch (11) mittels zweier Führungsstangen (10) radial geführt ist.

4. Scheibenbremse nach den Ansprüchen 1 bis 3, **dadurch gekennzeichnet,** daß das Querjoch (11, 22) in Form und Abmessung der lichten Weite des Bremsbetätigungsgehäuses (7, 23) angepaßt ist.

5. Scheibenbremse nach den Ansprüchen 1 bis 4, **dadurch gekennzeichnet,** daß das Stellglied gleichzeitig als Abschlußdeckel für das Bremsbetätigungsgehäuse (7, 23) dient.

6. Scheibenbremse nach den Ansprüchen 1 bis 5, **dadurch gekennzeichnet,** daß als Stellglied ein hydraulischer Bremszylinder (15) vorgesehen ist.

7. Scheibenbremse nach den Ansprüchen 1 bis 6, **dadurch gekennzeichnet,** daß die Betätigungselemente über längenverstellbare Glieder (Gelenkkopfschraube (9)) am Querjoch (11, 20) gelagert sind.

8. Scheibenbremse nach den Ansprüchen 1 bis 7, **dadurch gekennzeichnet,** daß die Betätigungselemente zumindest annähernd in einer quer zur Bewegungsbahn des Kolbens (14) des Bremszylinders (15) durch die Achse des Gelenkbolzens (12) bzw. Exzenterbolzens (24) verlaufenden Ebene an den Gelenkschrauben (9, 25) angreifen.

9. Scheibenbremse nach den Ansprüchen 1 bis 8, **dadurch gekennzeichnet,** daß als Betätigungselemente Druckstangen (5) vorgesehen sind.

10. Scheibenbremse nach den Ansprüchen 1 bis 9, **dadurch gekennzeichnet,** daß das Querjoch (11) im Querschnitt glockenförmig ausgebildet ist und in seinem inneren auf dem Gelenkbolzen (12) eine radial zur Druckscheibe (3) verlaufende Lasche (18) gelagert ist, die in ihrem freien Endbereich ein Langloch (18a) aufweist, in das ein im Bremsbetätigungsgehäuse (7) gelagerter, von außen verschwenkbarer Exzenterbolzen (19) mit seinem Exzenter (19a) eingreift, der in einer Schwenkendstellung des Exzenterbolzens (19) eine freie Verschiebbarkeit des Gelenkbolzens (12) gewährleistet und in der anderen Schwenkend stellung den Gelenkbolzen (12) derart verschiebt, daß die Druckscheiben (3) im Bremssinne verdreht sind.

11. Scheiben nach einem oder mehreren der Ansprüche 1 bis 9, **dadurch gekennzeichnet,** daß das Querjoch (22) auf dem Exzenter (24a) eines im Bremsbetätigungsgehäuse (23) drehbar gelagerten, zwischen zwei Schwenkendstellungen verschwenkbaren Exzenterbolzens (24) sitzt und um den Exzenterbolzen (24) pendelbar ist, wobei der Exzenter (24a) derart gegen den Exzenterbolzen (24) versetzt ist, daß die Verbindungslinie der Achsen des Exzenterbolzens (24) und des Exzenters (24a) bei betätigter Scheibenbremse mit der Ebene (17) einen Winkel von etwa 90° einschließt.

0 250 912

Fig. 1
(Schnitt · A-A)

Fe 1433

Fig. 2
(Ansicht X)

10    9    5    3

B    A

A    B

3    5    9    13    12    11    10

Fig. 3

(Schnitt : B-B)

14

15a

13

10

10

11

12    7

18

1a

Fig. 4

(Schnitt : C-C)

15a

7

12

19b

20    21

19    19a    18

Fe 1433

# Fig. 5

Fe 1433